# EUROPEAN PATENT APPLICATION

(11) **EP 4 012 595 A1**
(43) Date of publication of application: **15.06.2022**
(21) Application number: 20212401.2
(22) Date of filing: 08.12.2020
(51) Int. Cl.: G06F 30/20, G06F 30/23, G06F 119/08, G06F 113/10, G06F 119/14

(54) **COMPUTER-IMPLEMENTED TOPOLOGY OPTIMIZATION MODEL FOR COMPONENTS UNDER DESIGN-DEPENDENT LOADS**

(71) Applicant: Siemens Energy Global GmbH & Co. KG, 81739 München (DE); University of Waterloo, Waterloo N2L 3G1 (CA)
(72) Inventor: Bonakdar, Ali, Nuns Island, H3E2B7 (CA); Ibhadode, Osezua, Waterloo, N2L 3V5 (CA); Toyserkani, Ehsan, Waterloo, N2V 0E7 (CA)
(74) Representative: Roth, Thomas

(57) **Abstract**

A computer-implemented topology optimization method for constructing components (10) of high thermal and mechanical resistivity, comprising the steps of:

(i) defining a draft component design (CAD), a thermal boundary condition and a plurality of load requirements,

(ii) conducting a thermal analysis, wherein a heat transfer is calculated within the thermal boundary condition to obtain a local temperature gradient distribution, wherein said distribution is used to compute thermal loads (T),

(iii) conducting an analysis, wherein a load combination, comprising the thermal loads (T) and a design-dependent mechanical load (P, F), is analyzed simultaneously,

(iv) optimizing the computation of the analyses, wherein structure domain variables are updated,

(v) verifying a convergence of the computation, and - if the computation does not converge - the method is repeated as of step ii), otherwise

(vi) finalizing the optimization.

## Description

The present invention relates to a computer-implemented topology optimization method for constructing components of high thermal and mechanical resistivity. Furthermore, a corresponding additive manufacturing method and computer program product are provided.

Preferably, the component denotes a component of a turbo machine, e.g. applied in the flow path hardware of a gas turbine. The component is, thus, preferably highly performant or resilient to mechanical as well as thermal loads. To this effect, said components may be made of a nickel- or cobalt-based superalloy, particularly a precipitation hardened alloy.

In the alternative, the component may pertain to a high-performance component, such as a component applied in power generation, aerospace or the automotive sector.

To improve the performance and reduce cost in producing such components in gas or steam turbine or generator applications, a design or redesign using topology optimization is a promising approach.

"Topology optimization" is particularly a known tool, employing mathematical algorithms, by which an optimal structural layout of the component's structure - being subjected to considerable mechanical and thermal load - and under certain boundary conditions and constraints, may be provided. Topology optimization aims at obtaining an optimal design e.g. at a minimal material effort, thereby saving material volume, weight and production costs. Due to the nature of topology optimization solutions, as being predestined for intricately linked or filigree features, traditional manufacturing technologies are only marginally affected.

Complex or intricately designed components are, however, known to be suitable for "additive manufacturing", employing a layer-by-layer buildup.

Additive manufacturing (AM) techniques particularly comprise e.g. powder-bed-fusion methods, such as selective laser melting (SLM) or laser powder bed fusion (LPBF), selective laser sintering (SLS) and electron beam melting (EBM).

Such powder-bed methods have proven to be useful and advantageous in the fabrication of prototypes or complex components, such as components with a mazelike or convoluted structure or functionally cooled components. Further, additive manufacturing stands out for its short chain of process steps which in turn enables material economization and a particularly low lead time.

LPBF-apparatuses or setups for usually comprise a manufacturing or build platform on which the component is built layer-by-layer after the feeding of a layer of base material which may then be melted, e.g. by an energy beam, such as a laser, and subsequently solidified. The layer thickness is determined by a recoater that moves, e.g. automatically, over the powder bed and removes excess material from a manufacturing plane. Typical layer thicknesses amount to between 20 µm and 80 µm. During the manufacture, said energy beam scans over the surface and melts the powder on selected areas which may be predetermined by a CAD-file according to the geometry of the component to be manufactured. Said scanning or irradiation is preferably carried out in a computer-implemented way or via computer aided means, such as computer aided manufacturing (CAM) instructions, which may be present in the form of a dataset. Said dataset or CAM-file may be or refer to a computer program or computer program product.

Not only in this manufacturing context, topology optimization has been developed for load situations, such as unidirectional or multi-directional point forces, torques, couples, unrestrained or design-independent pressure, bearing loads and so forth. There are, however, practical applications showing that conventional approached will not be sufficient to adequately define or model a complex multi-physics scenario, i.e. coupled processes or systems involving more than one simultaneously pertinent physical field. Components as e.g. applied within or near a combustion chamber of a gas turbine are subjected to very high temperatures as well as to huge (design-dependent) pressure or other rotational or mechanical loads, such as centrifugal forces.

Conventional topology optimization approaches feature e.g. a compliance minimization using a consolidation of weighted compliance functions from every load type. In this form of solution, arbitrary values are selected as weighted factors of each compliance. The sensitivity of each compliance and constraint function is computed. The constraint in this case is the volume fraction. The sensitivity data and filtered densities are sent to the optimizer to update the physical densities. In most state-of-the-art implementations, a very common load pair is constituted by a global temperature and one or more unidirectional point forces on the design domain.

Another form of tackling multi-physics topology optimization is by summing up the load contributions and minimizing the compliance. While this is done, an additional stress or temperature-based constraint is added to a regular volume constraint. Utilizing this methodology, relevant numerical examples are usually given by design problems with low global temperature gradients such that thermal stress loads are relatively low an/or comparable in magnitude to mechanical loads.

A further common methodology is the use of multi-material interpolation models. In the mentioned methodologies, a single material model is considered for optimization. In other words, a single material interpolation function is used to define the material property of every element in a discretized design domain. However, in this third methodology, more than one material is intended for the design, thereby leading a formulation of multiple material interpolation functions that define the material properties for different materials. This methodology is usually combined with the first two methodologies.

Although these methodologies are valid, they do not address optimizing a single material structure based on complex load cases such as local temperature gradients, design-dependent pressure and centrifugal loads, particularly not from rotational effects. In the context and field of applications, there is, thus, a demand for a more powerful and sophisticated optimization solution e.g. in order to cope with the requirements of an efficiency increase of stationary turbines in the energy sector.

It is, thus, an object of the present invention to provide for a solution of the outlined demands. The proposed methodology is a multi-physics topology optimization model to adequately address such complex load cases for components to be manufactured e.g. by LPBF.

The mentioned object is achieved by the subject-matters of the independent claims. Advantageous embodiments are subject-matter of the dependent claims.

An aspect of the present invention relates to a computer-implemented, such as multi-physics-based, topology optimization method or model for constructing or design optimization of components of high thermal and mechanical performance, such as particularly for hot gas path applications.

Said method may be a so-called RAMP-scheme approach ("Rational Approximation of Material Properties").

The method comprises defining a draft component design, such as a CAD (Computer-Aided-Design), thermal boundary conditions or constraints and a plurality of load or performance requirements.

The method further comprises conducting a thermal analysis, wherein a heat transfer is calculated within the thermal boundary condition to obtain a local temperature gradient or gradient distribution, wherein said distribution is further used to compute the respective thermal loads.

The method further comprises conducting an e.g. finite element, analysis, wherein a load combination, comprising the thermal load(s) and a design-dependent mechanical load is analyzed simultaneously.

The method further comprises optimizing the computation of the analyses, wherein structure design variables are updated.

The method further comprises verifying a convergence of an according computation of the optimization or optimization model, and - if the computation does not converge - the method is repeated as of the step of the conducting of the thermal analysis, and otherwise the optimization is finalized or completed.

When applying this novel multi-physics topology optimization methodology, performance of the introduced components can advantageously be increased - e.g. at a reduced material consumption - and therewith power conversion efficiency of the related machines. Particularly, the presented method advantageously allows to capture and account for a complex load situation (combination of loads) for the component, including a local temperature gradient, design-dependent pressure and e.g. centrifugal loads, wherein unique weight factors for every computational iteration are utilized.

Easily, a draft and/or component design can be provided by a respective CAD file or model, such as an STL-format, as input for a design domain calculation according to which load and boundary conditions have to be set up.

In an embodiment, the component's topology and/or design is implemented in a laser powder bed fusion (LPBF) or an electron beam melting (EBM) process.

In an embodiment the respective components are applied in a steam turbine or a gas turbine, such as in the hot gas path of such a turbine, wherein the topology optimization aims at a maximum or optimal stiffness properties of the respective component, wherein simultaneously material usage may be reduced. This embodiment can advantageously improve the component's efficiency and overall performance of a related turbine engine.

In an embodiment, the design-dependent mechanical load comprises a pressure and/or a centrifugal force.

In an embodiment, a compliance, flexibility or pliability of the relevant structure of the component is calculated to be minimized by consolidating weighted (single) compliances, resulting from the thermal, thermal gradient of thermal stress load, the pressure load and/or the centrifugal load.

In an embodiment said compliance is a global or overall compliance of the component's structure, and wherein - for the calculation of a structural or displacement (deviation) response - furthermore a load sensitivity of the structure is calculated. To this effect, the weighted single compliance or weighted factor of a particular load can be defined as a ratio of the load's sensitivity and/or the sensitivity of the load that causes the structure to be most sensitive. In addition, this functionality advantageously ensures a unique weighted value for every load and every iteration of the method/calculation.

In an embodiment the response is calculated in that - after the thermal analysis - three, linearly independent, spatial structure displacement vectors are calculated from the thermal load, the pressure load and/or the centrifugal load. This embodiment advantageously allows to obtain an expedient temperature gradient distribution on the design domain as a result of or with regard to the heat load and/or the defined thermal boundary conditions. A subroutine may e.g. carry out the mentioned thermal and mechanical analysis which advantageously allows to provide an expedient displacement response, i.e. as needed for a sensitivity calculation (cf. below). Moreover, another subroutine may act as an optimizer, such as for updating the relevant design variables.

In an embodiment, the mentioned structure domain variables (each) relate to a density variable of every (finite) element in a discretized component design. In other words, using the sensitivities of the related objective and constraint functions, the optimizer updates the density design variable of every element in said discretized domain.

In an embodiment, a Boundary Identification and Load Evolution (BILE) model is utilized to analyze or resolve the design-dependent mechanical or pressure load(s).

In an embodiment the computation is finalized in that, particularly converged, results are post-processed and/or converted in terms of format.

A further aspect of the present invention relates to a computer program or computer program product, comprising instructions which, when the program is executed by a computer, data processing device or build processor, causes said means to carry out the method of topology optimisation as described.

A computer program product as referred to herein may relate to a computer program means media constituting or comprising a computer-readable storage medium (be it volatile and nonvolatile) like a memory card, a USB stick, a CD-ROM, a DVD or a file downloaded or downloadable from a server or network. Such product may be provided by a wireless communication network or via transfer of the corresponding information by the given computer program, computer program product or the like. A computer program product may include or be included by a (non-transitory) computer-readable storage medium storing applications, programs, program modules, scripts, source code, program code, object code, byte code, compiled code, interpreted code, machine code, executable instructions, and/or the like.

A further aspect of the present invention relates to an additive manufacturing approach for establishing a component of high thermal and mechanical performance via laser powder-bed fusion or electron beam melting, wherein the component is constructed and/or construed with an optimized topology as can be achieved by the described method.

Advantages and embodiments relating to the described method may as well pertain or be valid with regard to the computer program product and/or the component as manufactured by an additive manufacturing process having executed or making use of the described topology optimization approach.

Further features, expediencies and advantageous embodiments become apparent from the following description of the exemplary embodiment in connection with the Figures.

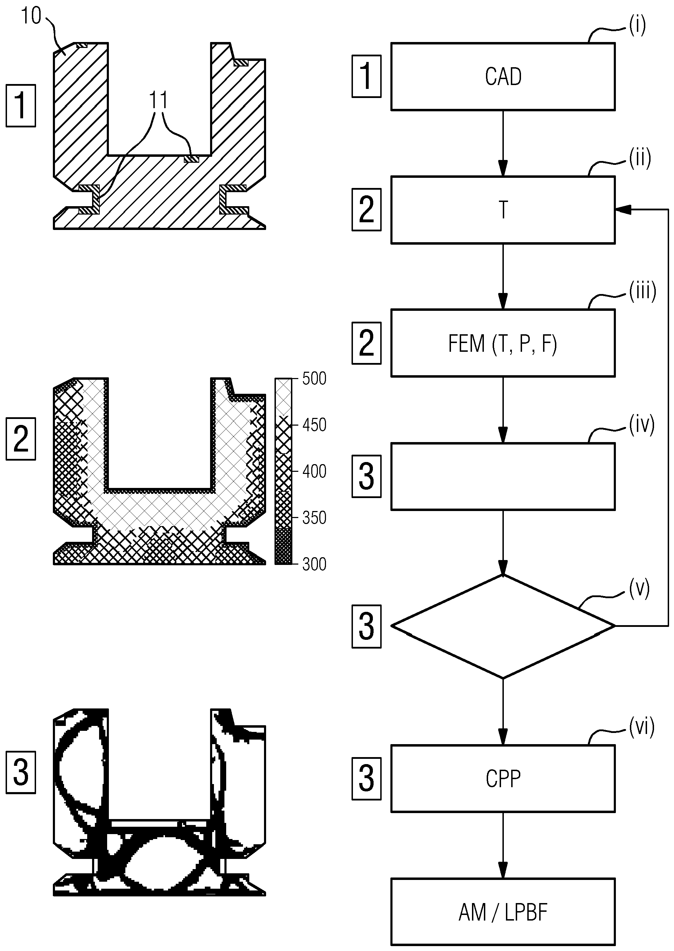

The Figure shows a schematic flow chart with pictograms indicating method steps of the present invention.

Like elements, elements of the same kind and identically acting elements may be provided with the same reference numerals in the figure. The Figure is not necessarily depicted true to scale and may be scaled up or down to allow for a better understanding of the illustrated principles. Rather, the described Figure is to be construed in a broad sense and as a qualitative base which allows a person skilled in the art to apply the presented teaching in a versatile way.

The term "and/or" as used herein shall mean that each of the listed elements may be taken alone or in conjunction with two or more of further listed elements.

The Figure shows a schematic flow chart of method steps according to the present invention. The presented method is a computer-implemented topology optimization method for constructing components 10 of high thermal and mechanical resistivity.

Such a component 10 as referred to herein may particularly relate to a part or an article of complex shape, such as with filigree portions of structures. Preferably, said component is made of a high-performance material, such as a material of great mechanical strength and/or thermal resistivity. Particularly, said part may constitute a part of a steam or gas turbine component, such as a blade, vane, shroud, shield, such as heat shield, tip, segment, insert, injector, seal, transition, burner, nozzle, strainer, orifice, liner, distributor, dome, boost, cone, lance, plate, resonator, piston or any corresponding retrofit kit. Alternatively, said component may relate to another or similar component.

The method comprises sequence of steps (i) to (vi) as shown on the right side of the Figure from the top to the bottom. Some of the listed steps are indicated with reference numbers pointing to pictograms on the left side of the Figure.

In step (i) the method comprises defining a component design CAD, a thermal boundary condition and a plurality of load requirements. The design may e.g. be a draft and/or preliminary design, or a base design.

In the given way, a design domain is provided and according performance requirements are obtained for the underlying calculation. Parts of such a component design 10 is illustrated in the pictogram indicated with reference number 1. At regions 11 the component design requires the definition of specific boundary conditions and/or load requirements, such as specifications necessary to enable the component to be applied according to its intended operation. Said requirements and conditions may e.g. be thermal as well as mechanical conditions of any kind.

In step (ii) the method comprises conducting a thermal analysis, wherein a heat transfer is calculated within the thermal boundary condition to obtain a local temperature T gradient distribution, wherein said distribution is used to compute thermal loads. In other words, the defined (thermal) boundary conditions are utilized together with a modelled heat input in order to obtain a reasonable temperature or temperature gradient distribution.

In step (iii) the method comprises conducting an (FEM) analysis, wherein a load combination, comprising the thermal loads, such as at a temperature T and a design-dependent mechanical load, is analyzed simultaneously. In other words, during said analysis, a displacement response of any design or structure domain is calculated from a given thermal load, pressure load and/or a (centrifugal) force load.

To this effect, a compliance or flexibility of the component's structure is calculated to be minimized, such as by consolidating weighted factors or compliances that result from the mentioned thermal load and the mechanical load, in turn comprising a pressure P and/or the centrifugal force F. An inverse of the given compliance may be constituted by the structural stiffness of the component, measured e.g. in Newton per meter (N/m).

The mentioned analysis under this step may be a finite element analysis, which may in parts be already known, like methodologies comprising fluid dynamics computations, or the like.

In this analysis, further, an iterated calculation is carried out (cf. below) such as by an optimizing algorithm, wherein, in each iteration, a value of an interpolation function preferably gradually increases. If a related computation converges (cf. step (v) of this method further below), said factors may be defined in terms of corresponding load or compliance sensitivities.

The mentioned compliance may be a global compliance of the component's structure 10, wherein - for the calculation of a structural or displacement response - said load sensitivities need to be calculated. To this effect, the weighted factor of a particular load is defined as the ratio of the load's sensitivity and the sensitivity of the load that causes the structure to be most sensitive. Preferably, the sensitivity of a related volume constraint or boundary function is also calculated, wherein it may have a value of "1" for uniform and constant volume of voxel elements.

Moreover, the mentioned response may be calculated in that three structure displacement vectors are calculated from the thermal load T, the pressure load P and/or the centrifugal load F.

The definition of such a global compliance or structural flexibility, with which a global temperature assignment may be achieved, by the way constitutes a unique feature over conventional or state-of-the-art topology optimization approaches.

These method steps shall be illustrated in the second pictogram, indicated with number 2. The indicated hatchings shall qualitatively indicate a thermal and/or a mechanical load situation by way of the design as shown already in the pictogram above (indicated with number 1).

In step (iv) the method comprises optimizing the computation of the analyses, wherein structure domain variables are updated. In this regard, the described methodology may resemble a so-called RAMP-scheme, wherein a particular domain is optimized by minimizing a consolidated compliance function (cf. above).

The mentioned structure domain variables preferably each relate to a density variable of every element in a discretized component design.

In the context of the above description, the sensitivities of the objective and constraint functions can be used, wherein the optimizer updates or actualizes the density design variable of every voxel or element in the discretized design domain.

In step (v) the method comprises verifying a convergence of the computation, and - if the computation does not converge - the method is repeated as of step ii) as indicated by the arrow on the right of the method flow chart.

In other words, the maximum deviation of the updated density variables from any previous values (prior to the update) is obtained and verified in a given or predetermined convergence limit. If the maximum deviation is e.g. higher than the convergence limit, another iteration of the optimization is carried out until the deviation becomes lower.

To this effect, a Boundary Identification and Load Evolution (BILE) model can be used to analyze the design-dependent mechanical loads (cf. pictogram indicated with 3).

Otherwise, i.e. if the computation does converge, the optimization is finalized. This is indicated in the final step (vi). During this step, the computation may e.g. be finalized in that the resulting data maybe post-processed and converted into a suitable format, such as a format that allows for the data import or rendering, such as by an according additive manufacturing system or build processor.

Numeral CPP indicates that the whole described functionality may be or be part of a computer program product CPP comprising instructions which, when the program is executed by a computer, data processing device or build processor, cause said means to carry out the described method.

Particularly, the described topology optimization approach is predestined for design optimization and construction in additive manufacturing, such as laser powder-bed fusion or electron beam melting, which provides an advantageous route for the construction of the components at issue.

## Claims

1. Computer-implemented topology optimization method for constructing components (10) of high thermal and mechanical resistivity, the method comprising:
- (i) defining a draft component design (CAD), a thermal boundary condition and a plurality of load requirements,
- (ii) conducting a thermal analysis, wherein a heat transfer is calculated within the thermal boundary condition to obtain a local temperature (T) gradient distribution, wherein said distribution is used to compute thermal loads,
- (iii) conducting an analysis, wherein a load combination, comprising the thermal loads (T) and a design-dependent mechanical load (P, F), is analyzed simultaneously,
- (iv) optimizing the computation of the analyses, wherein structure domain variables are updated,
- (v) verifying a convergence of the computation, and - if the computation does not converge - the method is repeated as of step ii), otherwise,
- (vi) finalizing the optimization.

2. Method according to claim 1, wherein the components (10) are applied in a gas turbine, and wherein the topology optimization aims at maximal stiffness properties of the respective component, wherein simultaneously material usage is reduced.

3. Method according to claim 1 or 2, wherein the design-dependent mechanical load comprises a pressure (P) and/or a centrifugal force (F).

4. Method according to claim 3, wherein a compliance is calculated to be minimized by consolidating weighted compliances resulting from the thermal load (T), the pressure load and/or the centrifugal load.

5. Method according to claim 4, wherein the compliance is a global compliance of the component's structure (10), and wherein - for the calculation of a structural displacement response - furthermore a load sensitivity of the structure is calculated.

6. Method according to claim 5, wherein the response is calculated in that - after the thermal analysis - three structure displacement vectors are calculated from the thermal load (T), the pressure load (P) and/or the centrifugal load (F) .

7. Method according to one of the previous claims, wherein the structure domain variables relate to a density variable of every element in a discretized component design.

8. Method according to one of the previous claims, wherein a Boundary Identification and Load Evolution (BILE) model is utilized to analyze the design-dependent mechanical loads.

9. Method according to one of the previous claims, wherein the computation is finalized in that results are post-processed, and data converted.

10. Computer program product (CPP) comprising instructions which, when the program is executed by a computer, data processing device or build processor (20), cause said means to carry out the method of one of claims 1 to 9.

11. Method of additive manufacturing (AM) a component of high thermal and mechanical resistivity via laser powder-bed fusion (LPBF) or electron beam melting, wherein the component (10) is constructed with an optimised topology according to the method one of claims 1 to 9.
